# EUROPÄISCHE PATENTANMELDUNG

(11) **EP 1 316 955 A1**
(43) Veröffentlichungstag der Anmeldung: **04.06.2003**
(21) Anmeldenummer: 01128610.1
(22) Anmeldetag: 30.11.2001
(51) Int. Cl.: G11B 20/10

(54) **Zwischenspeichereinrichtung**

(71) Anmelder: Infineon Technologies AG, 81669 München (DE)
(72) Erfinder: Barrenscheen, Jens, Dr., 81669 München (DE); Messner, Dietmar, 84173 Vilsbiburg (DE)
(74) Vertreter: Jannig, Peter, Dipl.-Ing.

(57) **Zusammenfassung**

Es wird eine Zwischenspeichereinrichtung zum Zwischenspeichern von weiterzuleitenden Daten beschrieben. Die beschriebene Zwischenspeichereinrichtung zeichnet sich dadurch aus, daß die Zwischenspeichereinrichtung eine Überwachungseinrichtung enthält, welche die Ausgabe von aus der Zwischenspeicherung angeforderten Daten überwacht, und welche beim Auftreten bestimmter Umstände dafür sorgt, daß die Zwischenspeichereinrichtung anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann. Dadurch kann zuverlässig verhindert werden, daß aus der Zwischenspeichereinrichtung ausgegebene Daten zu einer Beschädigung oder Zerstörung einer unter Verwendung dieser Daten arbeitenden Systemkomponente führen können.

## Beschreibung

Die vorliegende Erfindung betrifft eine Vorrichtung gemäß dem Oberbegriff des Patentanspruchs 1, d.h. eine Zwischenspeichereinrichtung zum Zwischenspeichern von weiterzuleitenden Daten.

Solche Zwischenspeichereinrichtungen werden beispielsweise, aber bekanntlich bei weitem nicht ausschließlich benötigt, um Daten zwischenzuspeichern, die als kontinuierlicher Datenstrom auszugeben sind, aber nicht als kontinuierlicher Datenstrom und/oder mit einer anderen Datenübertragungsrate bereitgestellt werden.

Wie bei praktisch allen technischen Vorgängen ist es nicht völlig auszuschließen, daß hierbei Probleme auftreten.

Eines dieser Probleme besteht darin, daß aus der Zwischenspeichereinrichtung auszugebende Daten noch nicht in der Zwischenspeichereinrichtung gespeichert sind, wodurch im auszugebenden Datenstrom eine Lücke entsteht.

Das Vorhandensein einer Lücke im auszugebenden Datenstrom kann die unterschiedlichsten Folgen haben.

Im Fall daß es sich bei den Daten um digital codierte Audiodaten handelt, die (nach einer D/A-Wandlung derselben) einem Verstärker zugeführt und über Lautsprecher wiedergegeben werden, kann das Vorhandensein einer Lücke im Datenstrom zu einer Pause, einem Knacken oder zu sonstigen Störungen in dem von den Lautsprechern abgegebenen akustischen Signalen führen.

Solche Störungen stören den Zuhörer und, was noch viel wichtiger ist, können unter Umständen dazu führen, daß der Verstärker und/oder die Lautsprecher beschädigt oder zerstört werden.

Der vorliegenden Erfindung liegt daher die Aufgabe zugrunde, eine Möglichkeit zu finden, durch welche verhindert werden kann, daß aus der Zwischenspeichereinrichtung ausgegebene Daten zu einer Beschädigung oder Zerstörung einer unter Verwendung dieser Daten arbeitenden Einrichtung führen können.

Diese Aufgabe wird erfindungsgemäß durch die in Patentanspruch 1 beanspruchte Zwischenspeichereinrichtung gelöst.

Die erfindungsgemäße Zwischenspeichereinrichtung zeichnet sich dadurch aus, daß sie eine Überwachungseinrichtung enthält, welche die Ausgabe von aus der Zwischenspeicherung angeforderten Daten überwacht, und welche beim Auftreten bestimmter Umstände dafür sorgt, daß die Zwischenspeichereinrichtung anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann.

Dadurch kann zuverlässig verhindert werden, daß aus der Zwischenspeichereinrichtung ausgegebene Daten zu einer Beschädigung oder Zerstörung einer unter Verwendung dieser Daten arbeitenden Systemkomponente führen können.

Vorteilhafte Weiterbildungen der Erfindung sind den Unteransprüchen, der folgenden Beschreibung, und den Figuren entnehmbar.

Die Erfindung wird im folgenden anhand von Ausführungsbeispielen unter Bezugnahme auf die Figuren näher erläutert. Es zeigen
- Figur 1: ein erstes Ausführungsbeispiel der im folgenden beschriebenen Zwischenspeichereinrichtung, und
- Figur 2: ein zweites Ausführungsbeispiel der im folgenden beschriebenen Zwischenspeichereinrichtung.

Die im folgenden beschriebene Zwischenspeichereinrichtung ist im betrachteten Beispiel Bestandteil eines sogenannten CODEC-Moduls.

Ein CODEC-Modul ist eine Einrichtung, welche
- ihr zugeführte analoge Daten einer Analog/Digital-Wandlung und gegebenenfalls weiteren Verarbeitungen wie beispielsweise einer digitalen Filterung und/oder einer Komprimierung unterzieht und diese Daten ausgibt, um sie z.B. auf einem Speichermedium zu speichern, und
- ihr zugeführte digitale Daten einer bestimmten Verarbeitung wie beispielsweise einer Dekomprimierung und/oder einer digitalen Filterung unterzieht, dann eine D/A-Wandlung ausführt, und die dabei erhaltenen analogen Daten ausgibt, um sie z.B. auf einer Stereoanlage wiederzugeben.

Die beschriebene Zwischenspeichereinrichtung ist im betrachteten Beispiel eine dem D/A-Wandler vorgeschaltete Einrichtung und sorgt dafür, daß dem D/A-Wandler ein kontinuierlicher Datenstrom zugeführt wird, wobei dies in der Regel auch dann gewährleistet sein soll, wenn der Zwischenspeichereinrichtung kein kontinuierlicher Datenstrom zugeführt wird, und/oder wenn die der Zwischenspeichereinrichtung zugeführten Daten eine andere Übertragungsrate aufweisen als die aus der Zwischenspeichereinrichtung auszugebenden Daten.

Es sei bereits an dieser Stelle darauf hingewiesen, daß die beschriebene Zwischenspeichereinrichtung nicht auf einen derartigen Einsatz beschränkt ist. Sie könnte auch an einer anderen Stelle innerhalb des CODEC-Moduls vorgesehen sein, oder Bestandteil einer kein CODEC-Modul darstellenden Einrichtung sein, oder eine eigenständige Einrichtung (ein eigener Baustein) sein.

Die Daten, die durch die Zwischenspeichereinrichtung zwischengespeichert und weitergeleitet werden, sind im betrachteten Beispiel Audiodaten. Durch das Vorsehen der Zwischenspeichereinrichtung, genauer gesagt durch deren Fähigkeit, die von ihr weiterzuleitenden Daten als kontinuierlichen Datenstrom auszugeben, kann erreicht werden, daß die durch die Daten repräsentierte Information unabhängig davon, wie die betreffenden Daten der Zwischenspeichereinrichtung zugeführt werden, über eine dem D/A-Wandler nachgeschaltete Stereoanlage oder eine sonstige Audiodaten-Wiedergabevorrichtung unterbrechungs- und störungsfrei wiedergegeben werden kann.

Die Daten, die durch die Zwischenspeichereinrichtung zwischengespeichert und weitergeleitet werden, müssen jedoch keine Audiodaten sein. Der Einsatz der beschriebenen Zwischenspeichereinrichtung kann sich auch in Fällen als vorteilhaft erweisen, bei welchen die zwischenzuspeichernden und weiterzuleitenden Daten keine Audiodaten sind.

Der Einsatz der Zwischenspeichereinrichtung ist auch nicht auf Fälle beschränkt, in welchen die der Zwischenspeichereinrichtung zugeführten Daten in Form eines kontinuierlichen Datenstroms weitergeleitet werden müssen. Der Einsatz der Zwischenspeichereinrichtung erweist sich immer als vorteilhaft, wenn sich das Timing und/oder die Reihenfolge, in welcher die in der Zwischenspeichereinrichtung gespeicherten Daten weiterzuleiten sind, sich vom Timing und/oder der Reihenfolge unterscheiden, in welcher die betreffenden Daten der Zwischenspeichereinrichtung zugeführt werden.

Das CODEC-Modul, dessen Bestandteil die Zwischenspeichereinrichtung ist, ist im betrachteten Beispiel Bestandteil einer programmgesteuerten Einheit wie beispielsweise eines Mikroprozessors, eines Mikrocontrollers oder eines Signalprozessors. Auch hierauf besteht keine Einschränkung. Das CODEC-Modul bzw. die die beschriebene Zwischenspeichereinrichtung enthaltende Einrichtung kann auch Bestandteil einer beliebigen anderen Einrichtung sein.

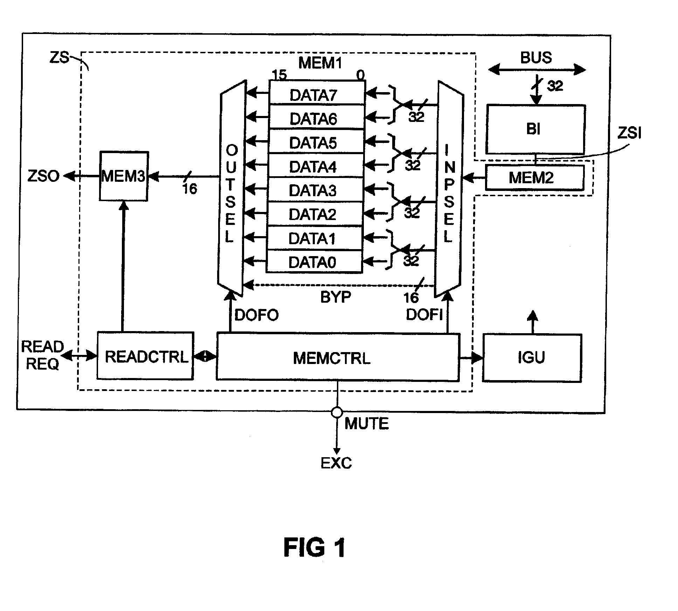

Eine programmgesteuerte Einheit, welche ein CODEC-Modul mit einer hier vorgestellten Zwischenspeichereinrichtung enthält, ist in Figur 1 gezeigt. Der Vollständigkeit halber sei darauf hingewiesen, daß nur die vorliegend besonders interessierenden Komponenten der programmgesteuerten Einheit, d.h. im wesentlichen ausschließlich die Zwischenspeichereinrichtung gezeigt sind und beschrieben werden.

Die Zwischenspeichereinrichtung ist mit dem Bezugszeichen ZS bezeichnet. Sie weist einen Eingangsanschluß ZSI auf, über welchen ihr von einer in der Figur 1 nicht gezeigten Datenverarbeitungseinrichtung über einen internen Bus BUS der programmgesteuerten Einheit und ein Bus-Interface BI Daten zugeführt werden, und einen Ausgangsanschluß ZSO, über welchen sie an einen in der Figur 1 nicht gezeigten D/A-Wandler Daten ausgibt.

Die Zwischenspeichereinrichtung ZS enthält
- einen ersten Speicher MEM1 zur Speicherung einer Vielzahl von Datenworten,
- eine Speichersteuereinrichtung MEMCTRL, zur Steuerung des Einschreibens von Daten in den ersten Speicher MEM1 und des Auslesens von Daten aus dem ersten Speichers MEM1,
- einen zweiten Speicher MEM2 zur Zwischenspeicherung ZS von der Zwischenspeichereinrichtung zugeführten Daten und Weiterleiten derselben an den ersten Speicher MEM1,
- einen dritten Speicher MEM3 zur Zwischenspeicherung von aus dem ersten Speicher MEM1 ausgegebenen Daten,
- eine Lesesteuereinrichtung READCTRL zur Steuerung des Auslesens von in der Zwischenspeichereinrichtung ZS gespeicherten Daten, und
- eine Interrupt-Erzeugungseinrichtung IGU zur Erzeugung von Interrupts.

Wenn der Zwischenspeichereinrichtung ZS Daten zugeführt werden, gelangen diese über den Bus BUS und das Bus-Interface BI in den zweiten Speicher MEM2, werden dort zwischengespeichert, und von dort unter der Steuerung durch die Speichersteuereinrichtung MEMCTRL in den ersten Speicher MEM1 übernommen.

Die Daten, die der Zwischenspeichereinrichtung ZS über den Bus BUS und das Bus-Interface BI zugeführt werden, sind im betrachteten Beispiel 32-Bit-Datenworte. Die Daten könnten selbstverständlich auch mehr oder weniger Bits umfassende Worte oder bitweise seriell übertragene Daten sein.

Der zweite Speicher MEM2 wird im betrachteten Beispiel durch ein Register gebildet, welches 32 Bits breit ist und folglich 1 Datenwort speichern kann.

Der erste Speicher MEM1 wird im betrachteten Beispiel durch einen FIFO-Speicher gebildet, und besteht im betrachteten Beispiel aus 8 16-Bit-Registern DATA0 bis DATA7, einer Eingabe-Auswahleinrichtung INPSEL, und einer Ausgabe-Auswahleinrichtung OUTSEL. Über die Eingabe-Auswahleinrichtung INPSEL wird bestimmt, in welche Register des ersten Speichers MEM1 die im zweiten Speicher MEM2 gespeicherten Daten jeweils übernommen werden. Dabei wird das im zweiten Speicher MEM2 gespeicherte 32-Bit-Datenwort jeweils in zwei 16-Bit-Datenworte aufgeteilt, welche dann in zwei verschiedenen Registern des ersten Speichers MEM1 gespeichert werden. Das im zweiten Speicher MEM2 gespeicherte 32-Bit-Datenwort wird im betrachteten Beispiel entweder in die Register DATA0 und DATA1, oder in die Register DATA2 und DATA3, oder in die Register DATA4 und DATA5, oder in die Register DATA6 und DATA7 geschrieben. In welche Register die im zweiten Speicher MEM2 gespeicherten Daten jeweils geschrieben werden, wird durch die Speichersteuereinrichtung MEMCTRL bestimmt. Diese steuert die Eingabe-Auswahleinrichtung INPSEL durch ein Steuersignal DOFI entsprechend an. Die Ansteuerung der Eingabe-Auswahleinrichtung INPSEL erfolgt derart, daß die Register DATA0 bis DATA7 der Reihe nach paarweise wie ein zyklischer Puffer beschrieben werden.

Der Vollständigkeit halber sei darauf hingewiesen, daß der erste Speicher MEM1 auch mehr oder weniger Register und/oder größere oder kleinere Register enthalten kann, und daß auch keine zwingende Notwendigkeit besteht, die dem ersten Speicher MEM1zugeführten Daten in zwei Datenworte aufzuteilen und in zwei verschiedenen Registern zu speichern.

Wenn aus der Zwischenspeichereinrichtung ZS Daten ausgelesen werden sollen, wird der Zwischenspeichereinrichtung ZS dies über ein der Lesesteuereinrichtung READCTRL zugeführtes Steuersignal READREQ signalisiert. Die Lesesteuereinrichtung READCTRL leitet das ihr zugeführte Steuersignal READREQ sofort oder später an die Speichersteuereinrichtung MEMCTRL weiter, welche die Ausgabe-Auswahleinrichtung OUTSEL über ein Steuersignal DOFO so ansteuert, daß eines der Register DATA0 bis DATA7 ausgelesen wird. Welches der Register DATA0 bis DATA7 ausgelesen wird, wird durch das Steuersignal DOFO bestimmt. Die Ansteuerung der Ausgabe-Auswahleinrichtung OUTSEL erfolgt derart, daß die Register DATA0 bis DATA7 der Reihe nach wie ein zyklischer Puffer ausgelesen werden.

Wenn die aus dem ersten Speicher MEM1 ausgelesenen Daten am Ausgangsanschluß der Ausgabe-Auswahleinrichtung OUTSEL anliegen, signalisiert dies die Speichersteuereinrichtung MEMCTRL der Lesesteuereinrichtung READCTRL. Die Lesesteuereinrichtung READCTRL signalisiert dies wiederum dem im betrachteten Beispiel durch ein Register gebildeten dritten Speicher MEM3, welcher daraufhin die am Ausgangsanschluß der Ausgabe-Auswahleinrichtung OUTSEL anliegenden Daten übernimmt. Die im dritten Speicher MEM3 gespeicherten Daten können der der Zwischenspeichereinrichtung ZS nachgeschalteten Einrichtung, im betrachteten Beispiel also von dem in der Figur 1 nicht gezeigten D/A-Wandler übernommen werden.

Die Zwischenspeichereinrichtung ZS weist die Besonderheit auf, daß sie eine Überwachungseinrichtung enthält, welche die Ausgabe von aus der Zwischenspeicherung angeforderten Daten überwacht, und welche beim Auftreten bestimmter Umstände dafür sorgt, daß die Zwischenspeichereinrichtung anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann.

Bei der in der Figur 1 gezeigten Zwischenspeichereinrichtung ZS besteht die durchgeführte Überwachung darin, daß überprüft wird, ob die Daten, die bei ordnungsgemäßem Betrieb der Anordnung aus der Zwischenspeichereinrichtung ZS ausgegeben werden müßten, überhaupt schon in der Zwischenspeichereinrichtung ZS gespeichert sind.

Die Daten, die bei ordnungsgemäßem Betrieb der Anordnung aus der Zwischenspeichereinrichtung ZS ausgegeben werden müßten, sind diejenigen Daten, die den zuletzt aus der Zwischenspeichereinrichtung ausgegebenen Daten folgen müßten, damit die durch die Daten repräsentierte Information richtig und vollständig weitergeleitet wird.

Wenn die Daten, die bei ordnungsgemäßem Betrieb der Anordnung aus der Zwischenspeichereinrichtung ZS ausgegeben werden müßten, aufgrund von Verzögerungen bei der Beschaffung, Erzeugung und/oder Übermittlung der betreffenden Daten der Zwischenspeichereinrichtung ZS noch gar nicht zugeführt wurden, ist die Zwischenspeichereinrichtung nicht in der Lage, die Daten auszugeben, die sie bei ordnungsgemäßem Betrieb der Anordnung ausgeben müßte.

Dies hätte im betrachteten Beispiel, bei welchem die Daten durch eine Stereoanlage oder dergleichen wiederzugebende Audiodaten sind, mit sehr großer Wahrscheinlichkeit das Auftreten von wahrnehmbaren Störungen zur Folge, wobei diese Störungen unter anderem in einem Knacken bestehen können, durch welches der Audioverstärker und/oder die Lautsprecher beschädigt oder zerstört werden können.

Dies kann durch die vorstehend genannte Überwachungseinrichtung verhindert werden.

Die Überwachungseinrichtung ist im betrachteten Beispiel Bestandteil der Speichersteuereinrichtung MEMCTRL.

Die Speichersteuereinrichtung MEMCTRL überprüft jedes Mal, wenn sie durch das ihr zugeführte Steuersignal READREQ zur Ausgabe von Daten aufgefordert wird, ob die Daten, deren Ausgabe gefordert wird, schon im ersten Speicher MEM1 gespeichert sind.

Für die Art und Weise, auf welche diese Überprüfung erfolgt, existieren mehrere Möglichkeiten.

Die Überprüfung kann beispielsweise anhand eines in der Speichersteuereinrichtung MEMCTRL verwalteten Schreibzeigers erfolgen, durch welchen spezifiziert wird, welches der Register DATA0 bis DATA7 als letztes beschrieben wurde und/oder anhand eines ebenfalls in der Speichersteuereinrichtung MEMCTRL verwalteten Lesezeigers, durch welchen spezifiziert wird, welches der Register DATA0 bis DATA7 als nächstes auszulesen ist. Welches Register als letztes beschrieben wurde, und welches Register als nächstes auszulesen ist, ist der Speichersteuereinrichtung MEMCTRL bekannt, weil diese ja selbst festlegt, in welches Register neue Daten zu schreiben sind, und aus welchem Register auszugebende Daten auszulesen sind.

Die Überprüfung, ob die aus der Zwischenspeichereinrichtung angeforderten Daten überhaupt schon in der Zwischenspeichereinrichtung gespeichert sind, kann somit beispielsweise dadurch erfolgen, daß bei jeder Anforderung von Daten aus der Zwischenspeichereinrichtung überprüft wird, ob der beim Auslesen zu verwendende Lesezeiger den beim letzten Schreibvorgang verwendeten Schreibzeiger überholt hat. Wenn dies der Fall ist, würde dies bedeuten, daß bei der Durchführung des angeforderten Auslesevorganges Daten aus einem Register ausgelesen werden würden, in welchem keine noch nicht ausgelesenen Daten gespeichert sind, was gleichbedeutend damit ist, daß beim Auslesen von Daten aus der Zwischenspeichereinrichtung nicht die Daten ausgegeben werden würden, die bei ordnungsgemäßem Betrieb der Anordnung ausgegeben werden müßten.

Eine andere Möglichkeit der Überprüfung ob die aus der Zwischenspeichereinrichtung angeforderten Daten überhaupt schon in der Zwischenspeichereinrichtung gespeichert sind, besteht darin, daß in der Speichersteuereinrichtung MEMCTRL für jedes der Register DATA0 bis DATA7 eine Information gespeichert und verwaltet wird, die angibt, ob das betreffende Register seit dem letzten Beschreiben desselben schon ausgelesen wurde. Diese Information kann aus einem Bit pro Register bestehen, wobei dieses Bit beispielsweise auf den Wert 1 gesetzt wird, wenn das zugeordnete Register mit neuen Daten beschrieben wird, und wobei dieses Bit auf den Wert 0 gesetzt wird, wenn das zugeordnete Register ausgelesen wurde. In diesem Fall müßte vor dem Auslesen von Daten aus der Zwischenspeichereinrichtung überprüft werden, ob das Bit, welches dem auszulesenden Register zugeordnet ist, den Wert 0 aufweist. Wenn dies der Fall ist, würde dies bedeuten, daß bei der Durchführung des angeforderten Auslesevorganges Daten aus einem Register ausgelesen werden würden, in welchem keine noch nicht ausgelesenen Daten gespeichert sind, was gleichbedeutend damit ist, daß beim Auslesen von Daten aus der Zwischenspeichereinrichtung nicht die Daten ausgegeben würden, die bei ordnungsgemäßem Betrieb der Anordnung ausgegeben werden müßten.

Eine weitere Möglichkeit zur Überprüfung, ob beim Auslesen von Daten aus der Zwischenspeichereinrichtung die Daten ausgegeben werden würden, die bei ordnungsgemäßem Betrieb der Anordnung ausgegeben werden müßten, besteht darin, daß in den Registern DATA0 bis DATA7 jeweils ein Bit reserviert ist, durch welches angezeigt wird, ob das betreffende Register seit dem letzten Beschreiben desselben schon ausgelesen wurde, und daß der Inhalt dieses Bits ausgewertet wird.

Es dürfte einleuchten und bedarf keiner näheren Erläuterung, daß auch noch weitere Möglichkeiten existieren, durch welche feststellbar ist, ob beim Auslesen von Daten aus der Zwischenspeichereinrichtung die Daten ausgegeben werden würden, die bei ordnungsgemäßem Betrieb der Anordnung ausgegeben werden müßten.

Wenn die Überwachungseinrichtung bzw. die diese enthaltende Speichersteuereinrichtung MEMCTRL auf die vorstehend beschriebene Art und Weise oder anders feststellt, daß die aus der Zwischenspeichereinrichtung angeforderten Daten noch nicht in der Zwischenspeichereinrichtung gespeichert sind, versetzt sich die Zwischenspeichereinrichtung in einen speziellen (Ausnahme-)Zustand, in welchem sie anders arbeitet als sonst.

Die Besonderheiten des Ausnahmezustandes bestehen darin, daß die Zwischenspeichereinrichtung anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann.

Die Daten, die die Zwischenspeichereinrichtung ZS anstelle der angeforderten Daten ausgibt, sind im betrachteten Beispiel die zuletzt ausgegebenen Daten. Dies wird vorliegend dadurch realisiert, daß die Speichersteuereinrichtung MEMCTRL im Ausnahmezustand den Lesezeiger unverändert läßt, also weiterhin die zuletzt angeforderten Daten aus der Ausgabe-Auswahleinrichtung OUTSEL ausgeben läßt. Dadurch bleiben die dem dritten Speicher MEM3 zugeführten Daten, und damit auch die im dritten Speicher gespeicherten und zur Abholung durch den D/A-Wandler bereitstehenden Daten gleich, und es werden anstelle der angeforderten Daten andere Daten aus der Zwischenspeichereinrichtung ausgegeben.

Weil die Daten, die im Ausnahmezustand anstelle der angeforderten Daten aus der Zwischenspeichereinrichtung ausgegeben werden, die zuletzt ausgegebenen Daten sind, ist die dadurch verursachte Störung in den von den Lautsprechern wiedergegebenen akustischen Signale nicht oder jedenfalls nicht deutlich wahrnehmbar. Es entstehen weder Pausen in der Wiedergabe, noch ein Knacken oder sonstige Störungen, durch welche der Verstärker und/oder die Lautsprecher beschädigt oder zerstört werden können.

Es könnte auch vorgesehen werden, in Ausnahmezuständen vorbestimmte andere Daten in den dritten Speicher MEM3 zu schreiben, und diese Daten aus der Zwischenspeichereinrichtung auszugeben, wobei es von der Verwendung der aus der Zwischenspeichereinrichtung ausgegebenen Daten abhängt, welche Daten hierfür geeignet sind.

Zusätzlich oder alternativ kann vorgesehen werden, daß die Speichersteuereinrichtung MEMCTRL während der Dauer des Ausnahmezustandes ein Signal ausgibt, durch welches signalisiert wird, daß sich die Zwischenspeichereinrichtung im Ausnahmezustand befindet, in welchem anstelle der von der Zwischenspeichereinrichtung angeforderten Daten andere Daten ausgegeben werden.

Dieses, in der Figur 1 mit dem Bezugszeichen EXC bezeichnete Signal wird im betrachteten Beispiel einem mit dem Bezugszeichen MUTE bezeichneten Ausgangsanschluß der programmgesteuerten Einheit zugeführt.

Verbindet man diesen Ausgangsanschluß MUTE mit dem die D/Agewandelten Zwischenspeichereinrichtungs-Ausgangssignale verstärkenden Verstärker, so verfügt dieser über eine Information darüber, daß die von ihm zu verstärkenden analogen Signale Störsignale sein könnten und/oder zu einer Beschädigung und/oder Zerstörung des Verstärkers oder der Lautsprecher führen können. Der Verstärker kann somit vorsorglich geeignete Maßnahmen ergreifen, durch welche dies verhindert werden kann. Diese Maßnahmen können beispielsweise darin bestehen, daß der Verstärker während der Dauer des Ausnahmezustandes den Verstärkungsfaktor so weit verringert, daß eine Beschädigung oder Zerstörung des Verstärkers und/oder der Lautsprecher ausgeschlossen ist. Zusätzlich oder alternativ könnte vorgesehen werden, daß der Verstärker während der Dauer des Ausnahmezustandes bestimmte Frequenzanteile der von ihm zu verstärkenden Daten herausfiltert oder abschwächt.

Vorzugsweise generiert die Zwischenspeichereinrichtung, genauer gesagt die Interrupt-Erzeugungseinrichtung IGU beim Auftreten des Ausnahmezustandes ein Interrupt-Request-Signal, durch welches veranlaßt wird, daß der Zwischenspeichereinrichtung schnellstmöglich wieder Daten zugeführt werden.

Die Zwischenspeichereinrichtung bleibt so lange im Ausnahmezustand, bis sie wieder in der Lage ist, die von ihr angeforderten Daten auszugeben, d.h., wenn die von ihr angeforderten Daten in ihr gespeichert sind. Wann dies der Fall ist, kann durch die in der Speichersteuereinrichtung MEMCTRL enthaltene Überwachungseinrichtung ermittelt werden. Hierzu muß lediglich überprüft werden, ob die Bedingungen, aufgrund welcher sich die Speichersteuereinrichtung MEMCTRL in den Ausnahmezustand versetzte, noch vorliegen.

Es wäre auch denkbar, den Ausnahmezustand bereits dann zu verlassen, wenn festgestellt wird, daß der zweite Speicher MEM2 mit neuen Daten beschrieben wurde. In diesem Fall dürften die aus der Zwischenspeichereinrichtung auszugebenden Daten nicht wie üblich aus dem ersten Speicher MEM1 ausgelesen werden, sondern müßten unter Umgehung des ersten Speichers MEM1 über die Eingabe-Auswahleinrichtung INPSEL und eine Bypaß-Leitung BYP aus dem zweiten Speicher MEM2 ausgelesen werden. Der Vollständigkeit halber sei angemerkt, daß gleichzeitig verhindert werden muß, daß die direkt aus dem zweiten Speicher MEM2 geholten Daten in den ersten Speicher MEM1 geschrieben werden.

Eine weitere Möglichkeit zur Überprüfung, ob die Verwendung der aus der Zwischenspeichereinrichtung auszugebenden Daten in den der Zwischenspeichereinrichtung nachgeschalteten Systemkomponenten zu Problemen führen kann, besteht darin, daß überprüft wird, ob die Größe und/oder der zeitliche Verlauf der ausgegebenen oder auszugebenden Daten bestimmte Bedingungen erfüllen.

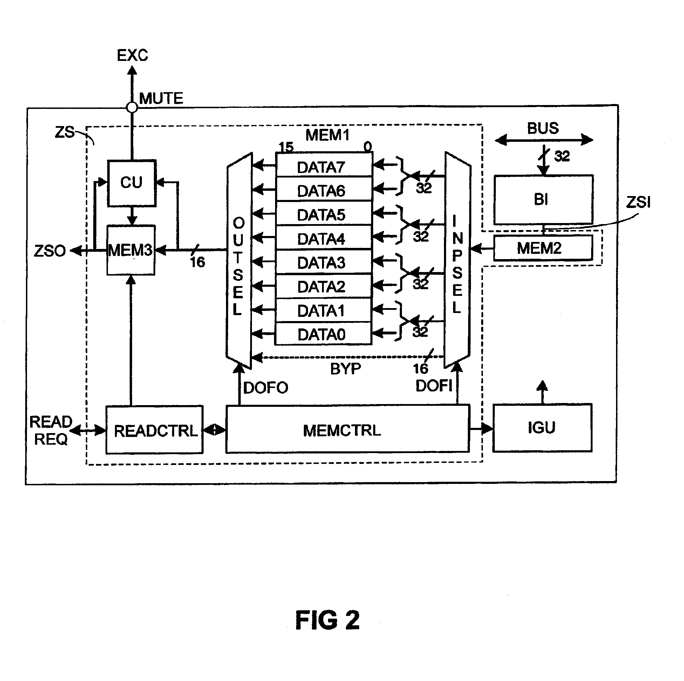

Eine programmgesteuerte Einheit mit einer Zwischenspeichereinrichtung, welche eine solche Überprüfung durchführt, und dann, wenn durch die Überwachungseinrichtung festgestellt wird, daß die Verwendung der ausgegebenen Daten in den der Zwischenspeichereinrichtung nachgeschalteten Systemkomponenten zu Problemen führen kann, anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann, ist in Figur 2 gezeigt.

Die in der Figur 2 gezeigte programmgesteuerte Einheit entspricht nahezu vollständig der in der Figur 1 gezeigten programmgesteuerten Einheit. Mit den selben Bezugszeichen bezeichnete Komponenten sind identische oder einander entsprechende Komponenten.

Die in der Figur 2 gezeigte programmgesteuerte Einheit unterscheidet sich von der in der Figur 1 gezeigten und unter Bezugnahme darauf beschriebenen programmgesteuerten Einheit darin,
- daß die Speichersteuereinrichtung MEMCTRL keine Überwachungseinrichtung enthält, durch welche überprüft wird, ob aus der Zwischenspeichereinrichtung ZS angeforderte Daten bereits in den ersten Speicher MEM1 eingeschrieben wurden, und
- daß die Zwischenspeichereinrichtung ZS eine mit dem Bezugszeichen CU bezeichnete und im folgenden noch genauer beschriebene Überwachungseinrichtung enthält.

Die Überwachungseinrichtung CU enthält zwei Eingangsanschlüsse, von welchen einer mit dem Eingangsanschluß des dritten Speichers MEM3, und der andere mit dem Ausgangsanschluß des dritten Speichers MEM3 verbunden ist.

Die Überwachungseinrichtung CU führt im betrachteten Beispiel zwei Überprüfungen durch.

Die erste Überprüfung besteht darin, daß die Überwachungseinrichtung CU überprüft, ob die Differenz der ihr über ihre Eingangsanschlüsse zugeführten Datenworte einen bestimmten Wert überschreitet. Die Differenz der der Überwachungseinrichtung CU über ihre Eingangsanschlüsse zugeführten Datenworte ist die Differenz zwischen nacheinander aus der Zwischenspeichereinrichtung auszugebenden Datenworte. Wenn diese Differenz zu groß ist, genauer gesagt größer ist als sie aufgrund der beschränkten Bandbreite der Audiosignale bei ungestörten Signalen sein dürfte, kann davon ausgegangen werden, daß die auszugebenden Daten eine Störung beinhalten. Folglich muß bei der Wiedergabe dieser Daten durch eine Stereoanlage oder dergleichen mit Störungen gerechnet werden, wobei diese Störungen in einem mehr oder weniger starken Knacken bestehen können, durch welches der Verstärker und/oder die Lautsprecher beschädigt oder zerstört werden können.

Eine zweite Überprüfung, welche die Überwachungseinrichtung CU durchführen kann, besteht darin, daß überprüft wird, ob die Differenz zwischen zwei oder mehreren nacheinander ausgegebenen oder auszugebenden Datenworten einen bestimmten Wert unterschreitet. Wenn die Differenz für eine gewisse Zeit gleich Null oder sehr klein ist, kann davon ausgegangen werden, daß die auszugebenden Daten keine Nutzdaten bzw. ausschließlich einen Gleichstromanteil enthalten. Folglich muß bei der Wiedergabe dieser Daten durch eine Stereoanlage oder dergleichen mit Störungen gerechnet werden, wobei zumindest durch einen größeren Gleichstromanteil der Verstärker und/oder die Lautsprecher beschädigt oder zerstört werden können.

In beiden Fällen, d.h. sowohl wenn die durch die Überwachungseinrichtung CU ermittelte Differenz zu groß ist, als auch wenn die durch die Überwachungseinrichtung CU ermittelte Differenz zu klein ist, werden durch die Überwachungseinrichtung CU Maßnahmen veranlaßt, durch welche verhindert wird oder werden kann, daß die der Differenzbildung zugrundeliegenden Daten zu Störungen in den der Zwischenspeichereinrichtung nachgeschalteten Systemkomponenten führen können.

Diese Maßnahmen bestehen darin, daß die Zwischenspeichereinrichtung anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann.

Daß die Zwischenspeichereinrichtung ZS anstelle der angeforderten Daten andere Daten ausgibt, kann beispielsweise dadurch realisiert werden, daß die Überwachungseinrichtung CU den dritten Speicher MEM3 dazu veranlaßt, die ihm von der Ausgabe-Auswahleinrichtung OUTSEL zugeführten Daten nicht zu übernehmen und statt dessen die in ihm gespeicherten und zuvor bereits ausgegebenen Daten nochmals auszugeben.

Es könnte auch vorgesehen werden, daß in den dritten Speicher MEM3 anstelle der ihm von der Ausgabe-Auswahleinrichtung OUTSEL zugeführten Daten vorbestimmte andere Daten geschrieben werden. Welch Daten hierfür geeignet sind, hängt von der Verwendung der aus der Zwischenspeichereinrichtung ausgegebenen Daten ab.

Daß die Zwischenspeichereinrichtung ZS signalisiert, daß die Verwendung der ausgegebenen Daten in den der Zwischenspeichereinrichtung nachgeschalteten Systemkomponenten zu Problemen führen kann, kann beispielsweise dadurch realisiert werden, daß die Überwachungseinrichtung CU über den Anschluß MUTE der programmgesteuerten Einheit ein entsprechendes Signal ausgibt.

Verbindet man diesen Ausgangsanschluß MUTE mit dem die D/Agewandelten Zwischenspeichereinrichtungs-Ausgangssignale verstärkenden Verstärker, so verfügt dieser über eine Information darüber, daß die von ihm zu verstärkenden analogen Signale Störsignale darstellen und/oder zu einer Beschädigung und/oder Zerstörung des Verstärkers oder der Lautsprecher führen können. Der Verstärker kann somit vorsorglich geeignete Maßnahmen ergreifen, durch welche dies verhindert werden kann. Diese Maßnahmen können beispielsweise darin bestehen, daß der Verstärker vorübergehend den Verstärkungsfaktor so weit verringert, daß eine Beschädigung oder Zerstörung des Verstärkers und/oder der Lautsprecher ausgeschlossen ist. Zusätzlich oder alternativ könnte vorgesehen werden, daß der Verstärker während der Dauer des Ausnahmezustandes bestimmte Frequenzanteile der von ihm zu verstärkenden Daten herausfiltert oder abschwächt.

Es dürfte einleuchten, daß die Überwachungseinrichtung CU auch beliebige andere Überprüfungen durchführen kann, durch welche feststellbar ist, ob die Verwendung der aus der Zwischenspeichereinrichtung ausgegebenen oder auszugebenden Daten in den der Zwischenspeichereinrichtung nachgeschalteten Systemkomponenten zu Problemen führen können. Welche Überprüfungen hierfür geeignet sind, hängt von den durch die Daten repräsentierten Informationen sowie von den der Zwischenspeichereinrichtung nachgeschalteten Systemkomponenten ab.

Selbstverständlich wäre es auch möglich, die in der Figur 1 gezeigte und unter Bezugnahme darauf beschriebene Zwischenspeichereinrichtung und die in der Figur 2 gezeigte und unter Bezugnahme darauf beschriebene Zwischenspeichereinrichtung zu kombinieren. Die daraus resultierende Zwischenspeichereinrichtung könnte sämtliche der vorstehend beschriebenen Überprüfungen durchführen und auf die beschriebene Art und Weise auf die Überprüfungsergebnisse reagieren.

### Bezugszeichenliste

- BI: Bus-Interface
- BUS: Bus
- BYP: Bypass-Leitung
- DATAx: Register
- DOFI: Steuersignal
- DOFO: Steuersignal
- EXC: Mute-Signal
- IGU: Interrupt-Erzeugungseinrichtung
- INPSEL: Eingabe-Auswahleinrichtung
- MEMCTRL: Speichersteuereinrichtung
- MEM1: erster Speicher
- MEM2: zweiter Speicher
- MEM3: dritter Speicher
- MUTE: Ausgangsanschluß der programmgesteuerten Einheit
- OUTSEL: Ausgabe-Auswahleinrichtung
- READCTRL: Lesesteuereinrichtung
- READREQ: Steuersignal
- ZS: Zwischenspeichereinrichtung
- ZSI: Eingangsanschluß von ZS
- ZSO: Ausgangsanschluß von ZSO

## Patentansprüche

1. Zwischenspeichereinrichtung zum Zwischenspeichern von weiterzuleitenden Daten,
**dadurch gekennzeichnet,**
**daß** die Zwischenspeichereinrichtung (ZS) eine Überwachungseinrichtung (MEMCTRL; CU) enthält, welche die Ausgabe von aus der Zwischenspeicherung angeforderten Daten überwacht, und welche beim Auftreten bestimmter Umstände dafür sorgt, daß die Zwischenspeichereinrichtung (ZS) anstelle der angeforderten Daten andere Daten ausgibt und/oder signalisiert, daß die Verwendung der ausgegebenen Daten in den der Zwischenspeichereinrichtung nachgeschalteten Systemkomponenten zu Problemen führen kann.

2. Zwischenspeichereinrichtung nach Anspruch 1,
**dadurch gekennzeichnet,**
**daß** die Überwachungseinrichtung (MEMCTRL; CU) überprüft, ob die aus der Zwischenspeichereinrichtung (ZS) angeforderten Daten in dieser gespeichert sind, und daß die bestimmten Umstände, bei deren Auftreten die Überwachungseinrichtung (MEMCTRL; CU) dafür sorgt, daß die Zwischenspeichereinrichtung (ZS) anstelle der angeforderten Daten andere Daten ausgibt und/oder signalisiert, daß die Verwendung der ausgegebenen Daten in den der Zwischenspeichereinrichtung (ZS) nachgeschalteten Systemkomponenten zu Problemen führen kann, den Umstand umfassen, daß die aus der Zwischenspeichereinrichtung (ZS) angeforderten Daten in der Zwischenspeichereinrichtung (ZS) nicht gespeichert sind.

3. Zwischenspeichereinrichtung nach Anspruch 1,
**dadurch gekennzeichnet,**
**daß** die Überwachungseinrichtung (MEMCTRL; CU) überprüft, ob die auszugebenden Daten bestimmte Kriterien erfüllen.

4. Zwischenspeichereinrichtung nach Anspruch 3,
**dadurch gekennzeichnet,**
**daß** die Überwachungseinrichtung (MEMCTRL; CU) überprüft, ob die Differenz zwischen aufeinanderfolgend aus der Zwischenspeichereinrichtung (ZS) auszugebenden Datenworten größer ist als ein vorgegebener Wert, und daß die bestimmten Umstände, bei deren Auftreten die Überwachungseinrichtung (MEMCTRL; CU) dafür sorgt, daß die Zwischenspeichereinrichtung (ZS) anstelle der angeforderten Daten andere Daten ausgibt und/oder signalisiert, daß die Verwendung der ausgegebenen Daten in den der Zwischenspeichereinrichtung (ZS) nachgeschalteten Systemkomponenten zu Problemen führen kann, den Umstand umfassen, daß die Differenz zwischen aufeinanderfolgend aus der Zwischenspeichereinrichtung (ZS) auszugebenden Datenworten größer ist als der vorgegebene Wert.

5. Zwischenspeichereinrichtung nach Anspruch 3,
**dadurch gekennzeichnet,**
**daß** die Überwachungseinrichtung (MEMCTRL; CU) überprüft, ob die Differenz zwischen aufeinanderfolgend aus der Zwischenspeichereinrichtung (ZS) auszugebenden Datenworten kleiner ist als ein vorgegebener Wert, und daß die bestimmten umstände, bei deren Auftreten die Überwachungseinrichtung (MEMCTRL; CU) dafür sorgt, daß die Zwischenspeichereinrichtung (ZS) anstelle der angeforderten Daten andere Daten ausgibt und/oder signalisiert, daß die Verwendung der ausgegebenen Daten in den der Zwischenspeichereinrichtung (ZS) nachgeschalteten Systemkomponenten zu Problemen führen kann, den Umstand umfassen, daß die Differenz zwischen aufeinanderfolgend aus der Zwischenspeichereinrichtung (ZS) auszugebenden Datenworten kleiner ist als der vorgegebene Wert.

6. Zwischenspeichereinrichtung nach einem der vorhergehenden Ansprüche,
**dadurch gekennzeichnet,**
**daß** die anderen Daten, die anstelle der aus der Zwischenspeichereinrichtung (ZS) angeforderten Daten aus dieser ausgegeben werden, die zuletzt aus der Zwischenspeichereinrichtung (ZS) ausgegebenen Daten sind.

7. Zwischenspeichereinrichtung nach einem der vorhergehenden Ansprüche,
**dadurch gekennzeichnet,**
**daß** das Signal, durch welches die Zwischenspeichereinrichtung (ZS) signalisiert, daß die Verwendung der aus der Zwischenspeichereinrichtung (ZS) ausgegebenen Daten in den der Zwischenspeichereinrichtung (ZS) nachgeschalteten Systemkomponenten zu Problemen führen kann, auf einen Ausgangsanschluß (MUTE) des die Zwischenspeichereinrichtung enthaltenden Bausteins gegeben wird.

8. Zwischenspeichereinrichtung nach einem der vorhergehenden Ansprüche,
**dadurch gekennzeichnet,**
**daß** die Zwischenspeichereinrichtung (ZS) als Einrichtung zur Zwischenspeicherung von Audiodaten verwendet wird.

9. Zwischenspeichereinrichtung nach einem der vorhergehenden Ansprüche,
**dadurch gekennzeichnet,**
**daß** die Zwischenspeichereinrichtung (ZS) einem D/A-Wandler vorgeschaltet ist.

10. Zwischenspeichereinrichtung nach einem der vorhergehenden Ansprüche,
**dadurch gekennzeichnet,**
**daß** die Zwischenspeichereinrichtung (ZS) Bestandteil eines CODEC-Moduls ist.

11. Zwischenspeichereinrichtung nach einem der vorhergehenden Ansprüche,
**dadurch gekennzeichnet,**
**daß** die Zwischenspeichereinrichtung (ZS) Bestandteil einer programmgesteuerten Einheit ist.
